# EUROPÄISCHE PATENTSCHRIFT

(11) **EP 1 836 125 B1**
(45) Veröffentlichungstag und Bekanntmachung des Hinweises auf die Patenterteilung: **02.04.2014**
(21) Anmeldenummer: 05850315.2
(22) Anmeldetag: 21.12.2005
(51) Int. Cl.: C01B 3/56, C01B 3/48, C10J 3/00, C01B 13/02

(54) **VERFAHREN ZUM ERZEUGEN VON WASSERSTOFF UND ENERGIE AUS SYNTHESEGAS**
METHOD FOR PRODUCING HYDROGEN AND POWER FROM A SYNTHESIS GAS
PROCEDE DE PRODUCTION D'HYDROGENE ET D'ENERGIE A PARTIR D'UN GAZ DE SYNTHESE

(30) Priorität: 21.12.2004 DE 102004062687
(43) Veröffentlichungstag der Anmeldung: 26.09.2007
(73) Patentinhaber: ThyssenKrupp Uhde GmbH, 44141 Dortmund (DE)
(72) Erfinder: MENZEL, Johannes, 45731 Waltrop (DE)
(86) Internationale Anmeldenummer: PCT/EP2005/013765
(87) Internationale Veröffentlichungsnummer: WO 2006/066892

(56) Entgegenhaltungen:
- DE-A1- 19 651 282
- US-A- 4 725 381
- US-A- 4 936 869
- US-A- 5 955 039

## Beschreibung

Die Erfindung betrifft ein Verfahren zur Erzeugung von Wasserstoff und Energie aus Synthesegas. Verfahren dieser Art können in großen Chemiekomplexen eingesetzt werden, in denen Wasserstoff als Rohstoff gebraucht und außerdem elektrische Energie von einer Vielzahl von Verbrauchern abgenommen wird. Eine andere Verwendung sind Anlagen zur Erzeugung von Ammoniak, für dessen Herstellung große Mengen an Wasserstoff erforderlich sind und außerdem viel mechanische Energie zum Verdichten großer Gasmengen auf Hochdruck aufgewendet werden muss.

Verfahren zur gekoppelten Erzeugung von Wasserstoff und Energie aus Synthesegas sind im herkömmlichen Stand der Technik bereits bekannt. In der DE 196 51 282 A 1 wird beispielsweise ein Verfahren zur Erzeugung von Rohwasserstoff und elektrischer Energie aus einem kohlenwasserstoffhaltigen Einsatz und/oder aus Kohle in einem IGCC-Prozess (IGCC - Integrated Gasification Combined Cycle) mit einer Gasturbine beschrieben. Hierbei wird das Synthesegas zunächst mit Wasser gequencht, danach wenigstens zum Teil einer Shift-Konvertierung unterzogen, das erhaltene Gas wird aufgeteilt, wenn es nicht schon vor der Shift-Konvertierung aufgeteilt wurde, und beide Teilströme werden danach je einer getrennten physikalischen Wäsche unterzogen. Aus dem erzeugten Rohwasserstoff kann nach bekannten Verfahren Reinwasserstoff erzeugt werden.

US 4936869 offenbart ein Verfahren zum Erzeugen von Wasserstoff und Energie. Kohle werden in einer partiellen Oxidation zu Synthesegas umgesetzt. Für diese Oxidation wird reiner Sauerstoff verwendet. H₂S und andere Schwefelverbindungen werden aus dem Synthesegas entfernt. Aus diesem Synthesegas werden zwei Teilströme gebildet. Ein Teilstrom wird in einer Kohlenmonoxidkonvertierung umgesetzt, wonach das Gas zu einer PSA-Anlage geführt wird. Aus der PSA-Anlage wird Wasserstoff und ein Restgasstrom gewonnen. Der andere Teilstrom wird zu einer Gasturbine geführt wobei Energie erzeugt wird. Diesem Teilstrom wird das PSA-Abgas zugeführt. Der Stickstoffstrom wird verwendet für die Verflüssigung von Wasserstoff.

Die Aufgabe der vorliegenden Erfindung ist es daher ein wirtschaftlich und energetisch verbessertes Verfahren zur Verfügung zu stellen.

Die Erfindung löst die Aufgabe dadurch, dass
- aus dem Synthesegas 2 Teilströme gebildet werden,
- dem einen Synthesegas-Teilstrom zunächst Dampf zugegeben wird, wonach er einer CO-Konvertierung bei einer Temperatur von 220 °C bis 500 °C unterzogen wird,
- aus dem konvertierten Synthesegas anschließend in einer Druckwechsel-Absorptions-Vorrichtung (PSA-Anlage) Reinwasserstoff gewonnen und ein PSA-Restgas erzeugt werden,
- der andere Synthesegas-Teilstrom einer Energie-erzeugenden Gasturbine zur Verbrennung zugeführt wird,
- H₂S und ggf. weitere schwefelhaltige Komponenten in einer oder mehreren Abscheidevorrichtungen, die an beliebigen Stellen im Verfahren, jedoch noch vor dem Eintritt in die Gasturbine, angeordnet sind, abgeschieden werden
- das PSA-Restgas mit Stickstoff gemischt wird,
- das erhaltene Gasgemisch anschließend verdichtet wird, und
- das verdichtete Gasgemisch dem Synthesegas-Teilstrom zugemischt wird, der der Energie-erzeugenden Gasturbine zugeführt wird.

In einer vorteilhaften Ausgestaltung des Verfahrens beträgt der Anteil des dem PSA-Restgas zugemischten Stickstoffs vorzugsweise bis zu 80 % der resultierenden Mischung.

Einsatzgas ist jeweils Synthesegas mit üblicherweise ca. 60 % CO, ca. 20 % H₂ und weiteren 20 % N₂, H₂S, COS, H₂O, HCN, CH₄ und höheren Kohlenwasserstoffen, in welchem aber schädliche Spurenstoffe wie Staub, HCl, und NH₃ nicht mehr enthalten sind, bzw. in einer Nasswasserwäsche entfernt wurden. Sofern das Synthesegas aus einer partiellen Oxidation bzw. einer Anlage zur Vergasung von flüssigen oder festen Einsatzstoffen stammt, können die Anteile je nach Einsatzstoff auch davon abweichen, wobei CO im Bereich von 30 % bis 60 % und H₂ im Bereich von 20 % bis 50 % liegen können. Das Synthesegas wird üblicherweise bei einem Druck von 20 bis 80 bar vorgelegt und wurde direkt nach der Erzeugung des Synthesegases, die je nach Verfahren üblicherweise bei Temperaturen zwischen 800 und 1600 °C erfolgt, unter Energiegewinnung deutlich abgekühlt.

In einer weiteren Ausgestaltung des erfindungsgemäßen Verfahrens wird das CO, H₂ und H₂S enthaltende Synthesegas in einer partiellen Oxidation aus Kohle oder Kohlenwasserstoffen oder kohlenstoffhaltigen Rückständen oder Mischungen aus den vorgenannten Stoffen unter Einsatz von Rein-Sauerstoff oder sauerstoffangereicherter Luft erzeugt.

In einer weiteren Ausgestaltung des erfindungsgemäßen Verfahrens wird der in der partiellen Oxidation eingesetzte Sauerstoff in einer Luftzerlegungsanlage gewonnen und der hierbei anfallende Stickstoff zumindest zum Teil dazu genutzt, ihn dem PSA-Restgas, welches bei der Wasserstoffabtrennung erzeugt wird, zuzumischen.

Zumindest der Teilstrom des Synthesegases, der direkt zur Stromerzeugung genutzt werden soll, muss vor der Stromerzeugung noch entschwefelt werden, wobei zuerst das im Synthesegas vorhandene COS in einer katalytischen COS-Hydrolyse zu H₂S und CO₂ umgesetzt wird. Ebenso wird dort auch der größte Teil des HCN umgesetzt. Der die COS-Hydrolyse verlassende Prozessgasstrom wird üblicherweise bis auf Umgebungstemperatur abgekühlt. Anschließend wird das im Prozessgas enthaltene H₂S in einem möglichst selektiv auf H₂S wirkenden Waschprozess bis auf wenige ppm entfernt.

Diese Entschwefelung kann für den Teilstrom, der zur Wasserstofferzeugung vorgesehen ist, entweder vor oder hinter der CO-Konvertierung erfolgen. Ein geeignetes Verfahren hierzu wird beispielsweise in der DE 42 06 943 A 1 beschrieben. Eine Entschwefelung nach der CO-Konvertierung, also auch nach der Abzweigung des Teilstroms, der zur Wasserstofferzeugung vorgesehen ist, führt aber zur Notwendigkeit von mindestens zwei Anlagen zur Entschwefelung, für jeden der beiden Teilströme jeweils mindestens eine.

In einer weiteren Ausgestaltung des erfindungsgemäßen Verfahrens wird daher vorgesehen, dass die Entschwefelung noch vor der Aufteilung in zwei Teilströme, von denen der eine der Wasserstofferzeugung und der andere der Energieerzeugung in einer Gasturbine dient, durchgeführt wird.

Das Verhältnis der beiden Ströme nach ihrer Aufzweigung liegt dabei zwischen 1 zu 2 und 2 zu 1. Es kann auch variabel gehalten werden, damit je nach Marktverhältnissen das jeweils beste Verhältnis eingestellt werden kann.

In den Teil, der der Wasserstofferzeugung dient, wird Wasserdampf zugegeben, um anschließend eine CO-Konvertierung, die auch als CO-Shift, wenn bereits entschwefelt, als Sweet Shift, und wenn nicht entschwefelt, als Sour Shift, bezeichnet wird, durchzuführen. Die Menge hängt vom CO-Gehalt des Synthesegases ab, es muss mindestens soviel zugeführt werden, dass nach der CO-Konvertierung noch eine geforderte Mindestkonzentration von Wasserdampf im austretenden Prozessgas von z.B. 0,3 mol Dampf pro mol Gas gewährleistet ist.

Bei der CO-Konvertierung wird CO in H₂ umgewandelt nach der Formel

CO+ H₂O ⇒ CO₂ + H₂ (1),

in einem Temperaturbereich zwischen 220 °C bis 500 °C. Als Ergebnis erhält man z.B. ein Gas mit ca. 45 % CO₂, 50 % H₂ und einem Rest von CO und N₂, möglich ist auch etwa ein Gas mit 60 % H₂ und 35 % CO₂ mit einem Rest von 3 % CO und 2 % N₂.

Nachfolgend wird aus dem konvertierten Synthesegas in einer Druckwechsel-Absorptions-Vorrichtung (auch als PSA - Pressure Swing Adsorption - bezeichnet) Rein-H₂ mit einer Reinheit von z.B. 99,8 % erzeugt. Als PSA-Abgas erhält man z.B. ein Gas mit ca. 19 % H₂; 72 % CO₂, 7 % CO und 1 % sonstigen Gaskomponenten bei geringem Druck, etwa 1,3 bar absolut.

Dem PSA-Abgas wird nachfolgend N₂ beigemischt, die Mischung wird mittels eines Kompressors auf den Gasturbinendruck verdichtet und vor der Gasturbine dem vorher abgezweigten Synthesegasstrom zugeführt. Diese Zuführung dient zur Heizwertminderung des Brenngases zur Gasturbine, wodurch Temperaturspitzen bei der Verbrennung des Brenngases in der Gasturbine vermieden werden, so dass die Bildung von NOₓ soweit minimiert wird, dass sie zumindest den gesetzlichen Anforderungen entspricht.

Diese Moderation wird nach dem herkömmlichen Stand der Technik mit Stickstoff durchgeführt, welcher bei der Luftzerlegung - Sauerstoff wird beispielsweise in Vergasungsanlagen benötigt - mitanfällt. Die Verdichtung des Stickstoffs auf den Gasturbinendruck wird in der Regel mit einem eigens dafür notwendigen Stickstoff-kompressor durchgeführt und kann mengenmäßig so geregelt werden, dass im jeweiligen Lastbereich die Gasturbine im für eine minimale NO_{X}-Bildung günstigsten Arbeitsbereich betrieben werden kann.

Wird stattdessen das Abgas der Druckwechsel-Absorptions-Vorrichtung mit nur noch einem -gegenüber der ausschließlichen Moderation mit Stickstoff - deutlich geminderten Teil von zusätzlichem Stickstoff für die Moderierung der Gasturbine verwendet, ergeben sich die folgenden Vorteile:
- Die Rückverdichtung von PSA-Abgas und Stickstoff kann von einem einzigen Verdichter bewirkt werden. Gegenüber einer Moderation der Gasturbine mit reinem Stickstoff ergeben sich sowohl von den Investitionskosten als auch von den Betriebskosten nahezu keine Mehrkosten.
- Der im PSA-Abgas enthaltene Brennwert aufgrund von restlichem H₂ und CO wird energetisch optimal in der Gasturbine umgesetzt. Die Umsetzung ist deutlich günstiger als etwa in einer atmosphärischen Nachverbrennung mit integrierter Dampferzeugung, wie es im herkömmlichen Stand der Technik üblich ist. Letzten Endes führt dies zu einer Einsparung an Einsatzstoff für die Synthesegaserzeugung (Kohle, Gas, Öl), ohne dass dem Mehrkosten entgegenstünden, etwa aufgrund von Investitionskosten für einen zusätzlichen Kompressor, oder betrieblichen Mehrkosten, etwa für zusätzliche Kompressionsenergie, die ansonsten alternativ zum PSA-Abgas für die Verdichtung einer entsprechend großen Menge an Stickstoff aufzuwenden wäre.
- Die Luftzerlegungsanlage kann in wirtschaftlich vorteilhafter Weise als Niederdruckluftzerlegungsanlage ausgeführt werden, wobei der bei der Luftzerlegung ebenfalls anfallende Stickstoff mit einem Druck von ca. 1,3 bar abgegeben werden kann, dem gleichen Vordruck wie beim PSA-Offgas.
- Sofern der Wasserstoff zur Herstellung von NH₃ dienen soll, führt der Minderverbrauch von N₂ zu einer Einsparung der Gesamtherstellungskosten, da mehr N₂ für die NH₃-Herstellung zur Verfügung gestellt werden kann.

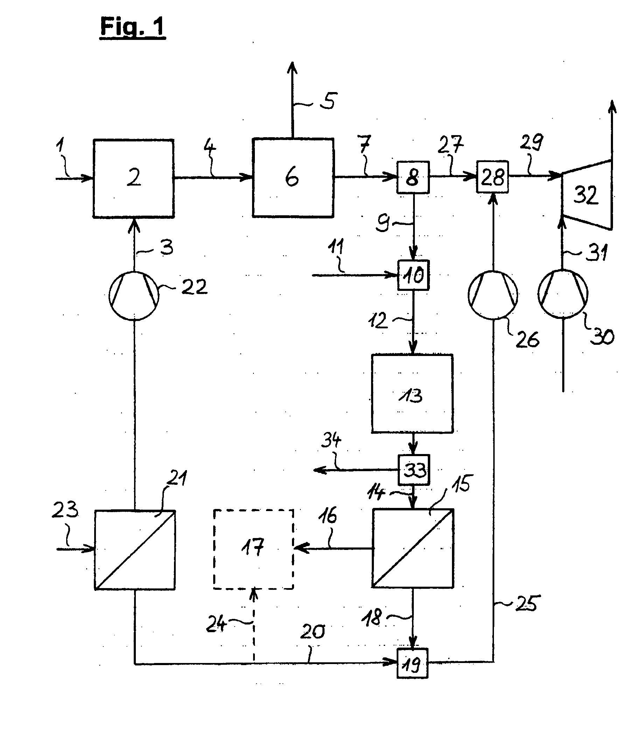

Die Erfindung wird nachfolgend anhand eines Verfahrensschemas in Fig. 1 näher erläutert: Fig. 1 zeigt das erfindungsgemäße Verfahren in einem stark vereinfachten Blockfließbild, bestehend aus Vergasung, Wäsche, Wasserstofferzeugung und Energieerzeugung, wobei das erfindungsgemäße Verfahren aber nicht auf diese beispielhafte Ausführungsform beschränkt ist.

Aus Kohle 1 wird in der partiellen Oxidation 2 zusammen mit Sauerstoff 3 das rohe Synthesegas 4 erzeugt, welches anschließend von unerwünschten, insbesondere schwefelhaltigen Komponenten 5 im Reinigungsverfahren 6 gereinigt wird. Das gereinigte Synthesegas 7 wird anschließend in der Abzweigung 8 in 2 Ströme aufgeteilt.

Dem einen Teilstrom 9 wird in der Zuführstelle 10 Dampf 11 zugeführt. Das Dampf-angereicherte Synthesegas 12 wird danach einer CO-Konvertierung 13 zugeführt, wo ein Wasserstoff-angereichertes Synthesegas erzeugt wird. Bei der Abkühlung des Gases nach der CO-Konvertierung fällt in der Kondensatabscheidung 33 Gaskondensat 34 an, welches aus dem Prozess ausgeschleust wird. Aus dem Wasserstoff-angereicherten Synthesegas 14 wird in der nachfolgenden Druckwechsel-Absorptions-Vorrichtung 15 Reinwasserstoff 16 erzeugt, der beispielsweise in einer optionalen Ammoniakherstellung 17 oder in einer Raffinerie zur Hydrierung von Kohlenwasserstoffen eingesetzt werden kann.

Das PSA-Abgas 18 wird im Mischer 19 mit einem Teil des Stickstoffs 20 gemischt, der in der Luftzerlegungsanlage 21, welche auch nach Druckanhebung im Sauerstoffverdichter 22 den Sauerstoff 3 für die partielle Oxidation 2 bereitstellt, aus Luft 23 erzeugt wird. Das Ersetzen von Stickstoff durch PSA-Abgas ermöglicht es beispielsweise, die optionale Ammoniakherstellung 17 mit zusätzlichem Stickstoff 24 zu versorgen.

Das Mischgas 25 aus PSA-Abgas 18 und Stickstoff 20 wird nach Druckanhebung im Stickstoffverdichter 26 dem anderen Teilstrom 27 des gereinigten Synthesegases im Mischer 28 zugemischt. Das hierbei entstehende Brenngas 29 wird mit im Luftverdichter 30 verdichteter Luft 31 in der Gasturbine 32 unter Energiegewinnung verbrannt. Die gewonnene mechanische Wellenenergie kann sowohl für die Erzeugung von elektrischer Energie als auch als Antrieb für die einzelnen benötigten Verdichtungen genutzt werden, sofern ein Anlagenverbund mit einer optionalen Ammoniakherstellung 17 besteht, kann auch hierfür benötigte Verdichtungsleistung von der Gasturbine 32 bereitgestellt werden.

Zur weiteren Veranschaulichung dient das folgende Auslegungs-Rechenbeispiel, wobei die Stromnummern denen in Fig. 1 entsprechen und alle Mengenangaben in kmol/h erfolgen.

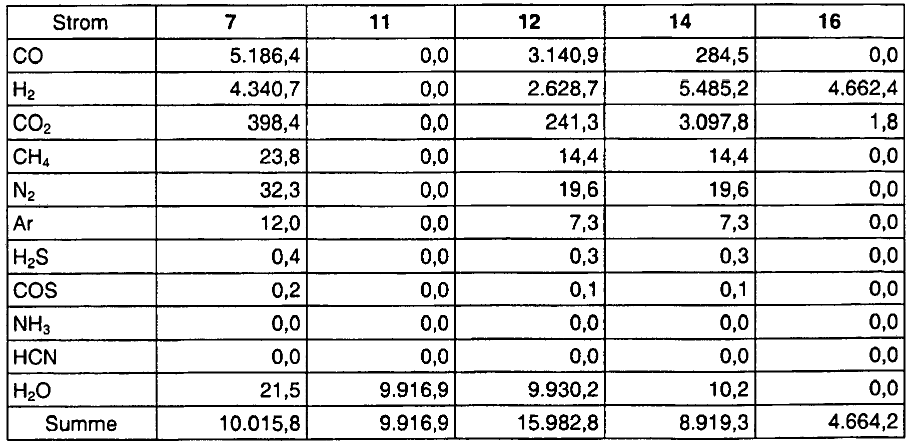

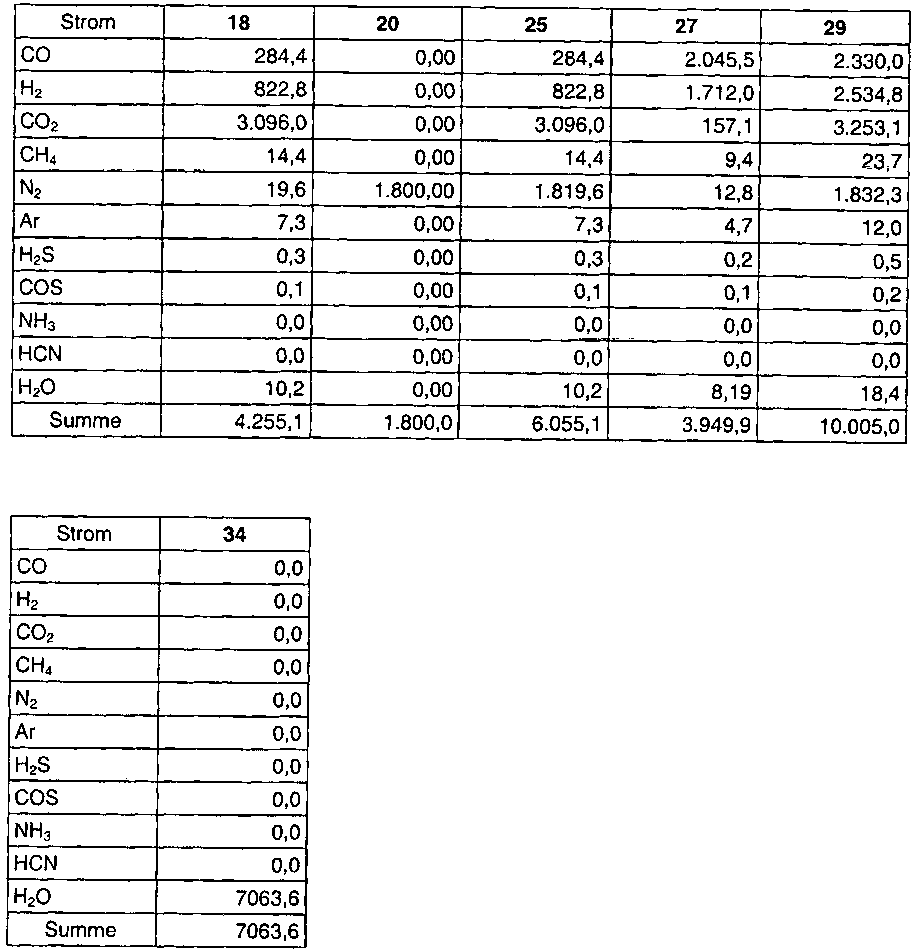

### Bezugszeichenliste

- 1: Kohle
- 2: partielle Oxidation
- 3: Sauerstoff
- 4: rohes Synthesegas
- 5: schwefelhaltige Komponenten
- 6: Reinigungsverfahren
- 7: gereinigtes Synthesegas
- 8: Abzweigung
- 9: Teilstrom
- 10: Zuführstelle
- 11: Dampf
- 12: Dampf-angereichertes Synthesegas
- 13: CO-Konvertierung
- 14: Wasserstoff-angereichertes Synthesegas
- 15: Druckwechsel-Absorptions-Vorrichtung
- 16: Reinwasserstoff
- 17: optionale Ammoniakherstellung
- 18: PSA-Abgas
- 19: Mischer
- 20: Stickstoff
- 21: Luftzerlegungsanlage
- 22: Sauerstoffverdichter
- 23: Luft
- 24: Stickstoff
- 25: Mischgas
- 26: Stickstoffverdichter
- 27: Teilstrom
- 28: Mischer
- 29: Brenngas
- 30: Luftverdichter
- 31: verdichtete Luft
- 32: Gasturbine
- 33: Kondensatabscheidung
- 34: Gaskondensat

## Patentansprüche

1. Verfahren zum Erzeugen von Wasserstoff und Energie aus wenigstens CO, H₂ und H₂S enthaltendem Synthesegas, wobei
• aus dem Synthesegas 2 Teilströme gebildet werden,
• dem einen Synthesegas-Teilstrom zunächst Dampf zugegeben wird, wonach er einer CO-Konvertierung bei einer Temperatur von 220 °C bis 500 °C unterzogen wird,
• aus dem konvertierten Synthesegas anschließend in einer Druckwechsel-Absorptions-Vorrichtung Reinwasserstoff gewonnen und ein PSA-Restgas erzeugt werden,
• der andere Synthesegas-Teilstrom einer Energie-erzeugenden Gasturbine zur Verbrennung zugeführt wird,
• H₂S und ggf. weitere schwefelhaltige Komponenten in einer oder mehreren Abscheidevorrichtungen, die an beliebigen Stellen im Verfahren, jedoch noch vor dem Eintritt in die Gasturbine, angeordnet sind, abgeschieden werden,
• das PSA-Restgas mit Stickstoff gemischt wird,
• das erhaltene Gasgemisch anschließend verdichtet wird, und
• das verdichtete Gasgemisch dem Synthesegas-Teilstrom zugemischt wird, der der Energie-erzeugenden Gasturbine zugeführt wird.

2. Verfahren nach Anspruch 1, **dadurch gekennzeichnet, dass** der Anteil des dem PSA-Restgas zugemischten Stickstoffs bis zu 80 % der resultierenden Mischung beträgt.

3. Verfahren nach einem der Ansprüche 1 oder 2, **dadurch gekennzeichnet, dass** das CO, H₂ und H₂S enthaltende Synthesegas in einer partiellen Oxidation aus Kohle oder Kohlenwasserstoffen oder kohlenstoffhaltigen Rückständen oder Mischungen daraus unter Einsatz von Rein-Sauerstoff oder sauerstoffangereicherter Luft erzeugt wird.

4. Verfahren nach Anspruch 3, **dadurch gekennzeichnet, dass** der in der partiellen Oxidation eingesetzte Sauerstoff in einer Luftzerlegungsanlage gewonnen wird und der hierbei anfallende Stickstoff zumindest zum Teil dazu genutzt wird, ihn dem PSA-Restgas, welches bei der Wasserstoffabtrennung erzeugt wird, zuzumischen.

5. Verfahren nach einem der Ansprüche 1 bis 4, **dadurch gekennzeichnet, dass** H₂S und ggf. weitere schwefelhaltige Komponenten in nur einer Abscheidevorrichtung, die vor der Stelle im Verfahren angeordnet wird, vor der die Aufteilung in die beiden Teilströme erfolgt, abgeschieden werden.

## Claims

1. Process for the generation of hydrogen and energy from synthesis gas which contains at least CO, H₂ and H₂S, in which
• the synthesis gas stream is split up into two part-streams,
• one of the synthesis gas part streams is first fed with steam and then undergoes CO conversion at a temperature ranging from 220 °C to 500 °C,
• high-purity hydrogen is then recovered from the converted synthesis gas in a pressure swing adsorption unit (PSA) and a PSA residual gas is generated,
• the other synthesis gas part-stream is fed to an energy-generating gas turbine for being burnt,
• H₂S and further sulphurous components, if any, are separated in one or more separation devices arranged at any points in the process but in any case upstream of the gas turbine inlet,
• the PSA residual gas is mixed with nitrogen,
• the gas mixture obtained is subsequently compressed, and
• the compressed gas mixture is mixed to the synthesis gas part-stream fed to the energy-generating gas turbine.

2. Process in accordance with claim 1, **characterised in that** the portion of nitrogen mixed to the PSA residual gas amounts to up to 80 % of the resulting mixture.

3. Process in accordance with claim 1 or 2, **characterised in that** the synthesis gas containing CO, H₂ and H₂S is produced from coal or hydrocarbons or carbon-bearing residues or mixtures thereof in a partial oxidation process with the aid of high-purity oxygen or oxygen-enriched air.

4. Process in accordance with claim 3, **characterised in that** the oxygen used in the partial oxidation process is separated in an air fractionation unit and the co-produced nitrogen is at least partly used to be mixed with the PSA residual gas which is obtained from hydrogen separation.

5. Process in accordance with one of claims 1 to 4, **characterised in that** H₂S and other sulphurous components, if any, are separated in only one separation device which is arranged in the process upstream of the point where the gas stream is split up into two part-streams.

## Revendications

1. Procédé de fabrication d'hydrogène et d'énergie à partir d'un gaz de synthèse contenant au moins du CO, du H₂ et du H₂S, sachant que
■ deux courants partiels sont formés à partir du gaz de synthèse,
■ un de ces courants partiels est d'abord alimenté en vapeur pour être ensuite soumis à une conversion de l'oxyde de carbone à une température comprise entre 220°C et 500°C,
■ du gaz de synthèse converti est obtenu par la suite de l'hydrogène pur dans un dispositif d'adsorption à pression alternée avec production d'un gaz résiduel PSA,
■ l'autre courant partiel du gaz de synthèse est introduit dans une turbine à gaz énergétique pour combustion,
■ le H₂S et tout autre composant éventuel sulfureux est déposé dans un ou plusieurs séparateurs implantés à tout endroit possible sur le processus, situé toutefois avant l'entrée dans la turbine de gaz,
■ le gaz résiduel PSA est mélangé à de l'azote,
■ le mélange gazeux obtenu est ensuite compressé et
■ le mélange gazeux compressé est ajouté au courant partiel du gaz de systèse, qui est introduit dans la turbine à gaz énergétique.

2. Procédé conformément à la revendication 1, **caractérisé en ce que** la teneur de l'azote ajoutée au gaz résiduel PSA est de jusqu'à 80 % du mélange résultant.

3. Procédé conformément à la revendication 1 ou 2, **caractérisé en ce que** le gaz de synthèse contenant du CO, H₂ et H₂S est produit lors d'une oxydation partielle à partir de charbon ou d'hydrocarbures ou de résidus carbonés ou de mélanges de ceux-ci à l'aide d'oxygène pur ou d'air enrichi en oxygène.

4. Procédé conformément à la revendication 3, **caractérisé en ce que** l'oxygène utilisé pour l'oxydation partielle est obtenu dans une installation de production d'air et que l'azote ainsi produit est utilisé au moins en partie pour être mélangé au gaz résiduel PSA produit lors de la séparation de l'hydrogène.

5. Procédé conformément à une des revendications 1 à 4, **caractérisé en ce que** le H₂S et tout autre composant éventuel sulfureux est déposé dans un seul séparateur implanté à un endroit du processus en amont de la séparation en deux courants partiels.
